Europäisches Patentamt

European Patent Office

Office européen des brevets

(11) Publication number: **0 495 980 A1**

## EUROPEAN PATENT APPLICATION
## published in accordance with Art. 158(3) EPC

(21) Application number: 90912028.9

(22) Date of filing: **14.08.90**

(86) International application number:
**PCT/JP90/01034**

(87) International publication number:
**WO 92/03868 (05.03.92 92/06)**

(51) Int. Cl.5: **H02H 9/06**

(43) Date of publication of application:
**29.07.92 Bulletin 92/31**

(84) Designated Contracting States:
**DE FR GB**

(71) Applicant: **MITSUBISHI MINING & CEMENT CO., LTD.**
**5-1, Marunouchi 1-chome Chiyoda-ku Tokyo 100(JP)**

(72) Inventor: **KURASAWA, Kouichi, 1014, OuazaYokoze Yokoze-machi Chichibu-gun**

**Saitama 368(JP)**
Inventor: **TANAKA, Yoshiyuki, Seishin-ryou 17-19, Nishi-Ooi 5-chome Shinagawa-ku Tokyo 140(JP)**
Inventor: **ITO, Takaaki, 1014, OuazaYokoze Yokoze-machi Chichibu-gun Saitama 368(JP)**

(74) Representative: **Jennings, Nigel Robin et al KILBURN & STRODE 30 John Street London WC1N 2DD(GB)**

(54) **CIRCUIT CONNECTION DEVICE HAVING OVERVOLTAGE/OVERCURRENT PROTECTION FUNCTION.**

(57) This invention relates to a circuit connection device having overvoltage/overcurrent protection function for communication equipments which can eliminate an overvoltage and an overcurrent. In order to protect communication equipment from overvoltage and overcurrent, a surge absorption element (2) is connected in parallel with terminals for connecting the equipment, and a metal wire (3) having a low melting point is connected in series with them in the proximity of the surge absorption element (3). The communication equipment is protected from surges between the lines of the communication equipment and between the lines and the ground by the surge absorption element and from continuous overvoltage and overcurrent by the low-melting metal wire because the surge absorption element is overheated and the metal wire blows out by the heat.

FIG. 2

(1)

(2)

## FIELD OF ART

The present invention relates to a line connection device with protection function to protect a communication equipment against overvoltage and overcurrent, precluding overvoltage and overcurrent. It relates particularly to a line connection box with protection function to protect against overvoltage and overcurrent, in which a surge absorbing element is contained, for protecting an equipment using a communication line.

## BACKGROUND OF THE ART

A protection function to protect against overvoltage and overcurrent has been needed for protecting a communication equipment, and electronic device.

Further, there is little space or room for containing devices to protect against overvoltage and overcurrent in necessary number of the devices respectively for each of the equipments.

A surge absorber is to protect an equipment such as a communication line, e.g. a telephone line for telephone and telecopier , and a line for a cable television and a cable radio the like, as well as a device, e.g. semiconductor device, from a lightening surge. A protection function of the surge absorber is to protect a communication device connecting communication lines when the communication line interconnects the source line to load overcurrent or overvoltage on the line, which will heat the breaker fuse wire as to melt the wire, thereby opening the circuit to protect the equipment from the overcurrent and overvoltage. There have been published Japanese Patent Publication No. 63-205026/1988 and U.S. Patent No. 4,317,155, which discloses in general a gap or microgap discharge tube surge absorbing element.

In an ordinary case, continuous overvoltage or overcurrent will not be loaded on an electronic device and an equipment to be connected to communication lines, but there has been spread concept of establishing safety measures as high as possible under consideration of accidental loading. As a typical one, there has been a regulation prepared by Underwriter's Laboratories Inc. in U.S.A. to prevent fire of the equipment or to avoid cause of fire thereof even when overvoltage or overcurrent is continuously applied to. There will be further safety regulation on the similar issues by influence of that regulation.

It is an object of the present invention to provide a line connection device with protection function to protect against overvoltage and overcurrent, containing a surge absorbing element to protect from overvoltage and overcurrent a device using communication lines, e.g. telephone lines.

Further, a certain room to contain a surge absorbing element having protection function to protect from overvoltage and overcurrent should be within each of the connection terminal, but, the connection device of the present invention does not need such room, and can provide equipment being connected essentially with protection function to protect against overvoltage and overcurrent.

Further, if the device to protect against overvoltage and overcurrent should be contained in the connection equipment which has been available, the modification of a substrate and the like will be necessary. However, the line connection device of the present invention will provide an equipment connected to communication lines and electric source which does not require a room or a space for special device to protect against overvoltage and overcurrent, and does not need special circuit nor equipment. The equipment being connected can be mounted and can be operated without any special device.

## DISCLOSURE OF INVENTION

In accordance with the present invention, a device or a structure to protect the equipment when overvoltage or overcurrent is loaded on a surge absorbing element with protection function to protect against overvoltage and overcurrent is contained, connecting each of the lines, and modular terminal device is connected to connect a number of the lines, the whole devices are assembled within a connection box.

As a device to protect against overvoltage and overcurrent, a surge absorbing element and a low melting point metal wire in approximation thereof are used, in accordance with the present invention, the surge absorbing element is connected in parallel with the equipment, and the low melting point metal wire is connected in series with the equipment within the structure.

"A surge absorbing element" hereinafter means "an equipment to avoid application of overvoltage and overcurrent by providing a gap or microgap on a portion of conductive thin film, such that discharge will occur through the gap or microgap, when overvoltage higher than critical level is applied on the gap or microgap, generating a branch flow for the overvoltage or overcurrent", and in ordinary structure, the conductive film having the gap or the microgap is enclosed and sealed in gas-charged tube. Therefore, it can be called a gap or microgap surge absorbing element.

"A line connection device having protection function to protect against overvoltage and overcurrent" hereinafter means "a device or an equipment with protection function, in which another element such as fuse wire and the like is provided, so as to prevent overheat or fire of the device, even when overvoltage and overcurrent is occasionally applied.

In accordance with the present invention, the combination of the gap surge absorbing element and low melting point metal wire is contained in a line connection device for connecting an equipment, such that the equipment can be protected by the combination of the gap surge absorbing element and the low melting point metal wire when overvoltage or overcurrent is applied to.

## SIMPLE DESCRIPTION OF DRAWINGS

FIG. 1 (1) and (2) shows schematically a line connection device with protection function to protect against overvoltage and overcurrent, for connecting a pair of lines, according to the present invention, and its circuit diagram.

FIG. 2 (1) and (2) shows schematically a line connection device with protection function to protect against overvoltage and overcurrent, for connecting six pair of lines, according to the present invention, and its circuit diagram.

FIG. 3 (1), (2) and (3) shows schematically an assembly module for multiple line connection devices with protection function to protect against overvoltage and overcurrent, for connecting a pair of lines, according to the present invention, which can enable to assemble necessary number of connection devices as shown in FIG. 2, and has common ground to earth, and and its circuit diagram, and its assemble structure with common ground terminal.

## BEST MODE FOR CARRYING OUT THE INVENTION

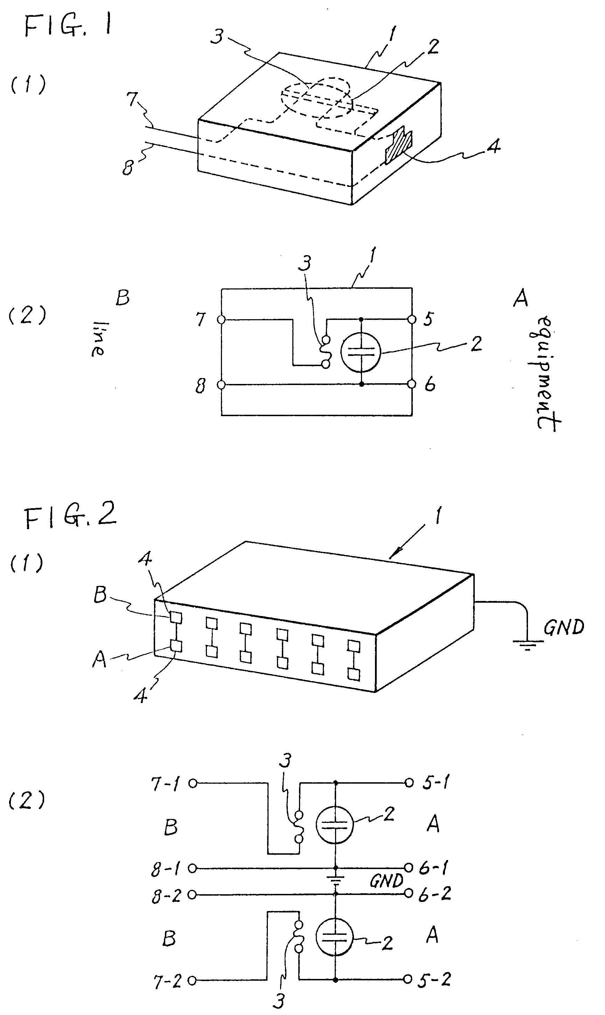

FIG. 1 (1) and (2) shows schematically a line connection device having protection function according to the present invention, and its circuit diagram.
There are provided a surge absorbing element 2, (which is a gap or microgap surge absorbing element), a low melting point metal wire 3 are contained as shown in FIG. 1 (2). When surge is loaded, it will pass through a surge absorbing element 2, so as to be discharged. Further, when overvoltage or overcurrent is continuously loaded, the surge absorbing element 2 is overheated and then the overheat will melt the low melting point metal wire 3 to open the circuit, thereby enabling to prevent the fire of the connection device, preventing the fire of the equipment.

The inventive line connection device with protection function to protect against overvoltage and overcurrent cam connect a number of pairs of communication lines as well as a pair of lines, as described before. In such case, a line connection box is assembled with common ground, and further including a junction of electric source.

In accordance with the present invention, there is provided a line connection device advantageous in assembling easily into a structure which can be used to connect a number of communication lines.

The inventive line connection device with protection function to protect against overvoltage and overcurrent can be used in a connector with a telephone line, a telecopier machine, and a telephone exchanging machine, in order to protect from a surge and overvoltage and overcurrent.

The present invention is further illustrated by the following examples, but should not be interpreted for the limitation of the invention.
5-13

## EXAMPLE 1

FIG. 1 shows a structure of an embodiment of the protection line connection device of the present invention in a schematic perspective view.

The connection device 1 of FIG. 1 (1) is a connector to connect one pair of lines, in which three terminals are provided within a modular jack 4 so as to connect a pair of communication lines, i.e. the terminals 5 and 6 of the equipment, as shown in FIG. 1 (2), and a terminal to connect a ground. Then, within the connection device 1, a minimized microgap surge absorbing element 2 and a low melting point metal wire 3 are positioned closely, and connected as shown in a circuit diagram of FIG. 1 (2) and contained in the device. Then, a pair of the lines are connected through terminals 7 and 8. When a surge is loaded from the lines, the surge absorbing element 2 will be operated. Further, a high voltage line for supplying from a alternative current source is contacted with the lines to load continuous overvoltage and overcurrent, the surge absorbing element will be continuously heated, thereby melting down a low melting point metal wire in close touch with the surge absorbing element, so as to open the circuit. Therefore, the overheat and the fire of the equipment can be avoided or prevented. Such line connection device with protection function to protect against overvoltage and overcurrent, which can be mounted from the outside can be used to protect the ordinary equipment which does not have protection function to protect against overvoltage and overcurrent.

## EXAMPLE 2

FIG. 2 shows schematically a structure of the line connection device with protection function to protect against overvoltage and overcurrent.

The connection device 1 of FIG. 2 (1) is to protect six pairs of lines, and has 6 modular jacks B for input of the lines, and 6 modular jacks A at output of the equipment, and further a common ground terminal to assemble wholly. Within the device, a circuit is connected as shown in FIG. 2 (2). There are provided in a modular jacks 4 and 6, three terminals of which are two ones to connect respectively a pair of communication lines, and another one to connect a ground. A ground is common, and connected to a ground line.

A minimized microgap surge absorbing element 2 and a low melting point metal wire 3 are mounted in a close relation, as shown in FIG. 2 (2), and contained within the connection box 1.

A line plug of the equipment is to be inserted into a connection hole 4 (A) of the connection box, and a communication line plug is to be inserted into a connection hole 9 (B). When a surge is loaded from the lines, it should run away to the ground. Then, two surge absorbing elements corresponding to a pair of the lines are provided and two low melting point metal wires are mounted respectively and closely on each of the surge absorbing elements. Further, when overvoltage or overcurrent is loaded between the lines or between the line and the ground, either of low melting point metal wires will be melt down by the heat generated in each of the surge absorbing elements, to open the circuit, thereby enabling to prevent overheat and fire of the equipment.

EXAMPLE 3

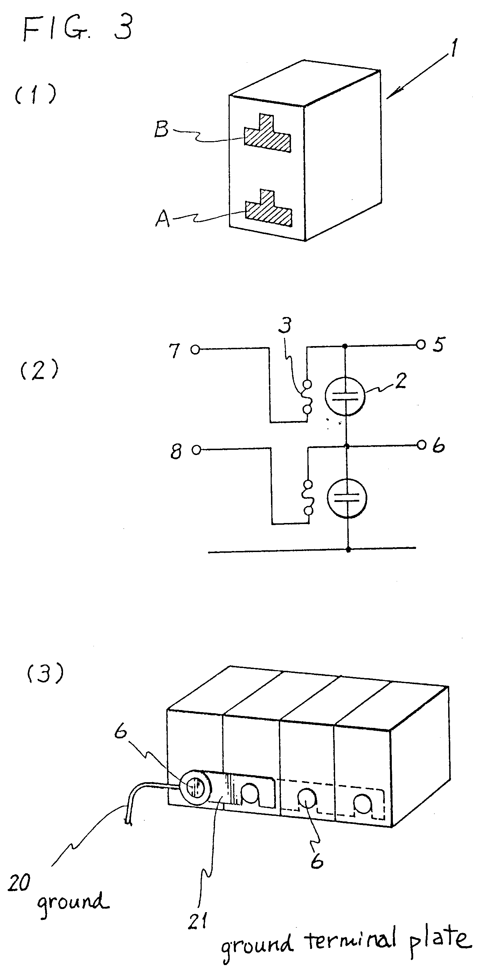

FIG. 3 shows schematically a structure of a connection device having protection function of the present invention.

The connection device as shown in FIG. 3 (1) is a connection box 1 for connecting a pair of lines, in which one modular jack B at output terminal of the equipment, and one modular jack at output terminal of the lines, and a terminal for ground are assembled. As assembled in Example 1, a minimized surge absorbing element 2 of microgap type and a low melting point metal wire 3 are connected as shown in FIG. 3 (2) of circuit diagram, and assembled. Further a ground terminal is mounted on a back surface of the line connection box 1, as shown in FIG. 3 (3). When a number of communication lines has to be connected by using a number of connection box 1, the connection boxes are assembled by one ground terminals to connect the earth , and the other joint plate 21 of the ground terminal, thereby producing a common ground terminal, so as to enable to form one body.

Several ones can be assembled by using a ground terminal junction plate, so as to produce a protective connection device for connecting desired pairs of lines, and then a necessary space can be minimized in a connection device.

INDUSTRIAL UTILIZATION

The line connection device having protection function will provide the following significant technological effects:

The equipment which has no surge absorbing element can he connected to a source and a communication line, having protection against overvoltage and overcurrent, without any need of device or circuit to protect from overvoltage and overcurrent as assembled, by the line connection device of the present invention. Further, the present invention can enable to provide ready connection assembly with protection function to protect against overvoltage and overcurrent, so as to connect a source and communication lines.

In a conventional case, it is necessary to provide a room or a space for containing or assembling a device to protect against overvoltage and overcurrent within each of the equipment. However, the use of the connection device of the present invention will remove such problem.

Further, the protection function to protect against overvoltage and overcurrent can be added to the equipment, without any modification of the circuit substrate, and the like of the equipment.

Therefore, the inventive line connection device with protection from overvoltage and overcurrent can protect the equipment such as a telephone, telecopier, and telephone exchanger to be connected to the line, from surge and overvoltage and overcurrent, then can be used for adding protection function as assembled.

**Claims**

1. A line connection device with protection function to protect an equipment to be connected against overvoltage and overcurrent, characterized by a structure comprising;
   a surge absorbing element in parallel with both terminals for connecting the equipment;
   and a low melting point metal wire in series with the equipment to be connected, which wire is contained in the device.

2. The line connection device according to claim 1, wherein said surge absorbing element is a microgap surge absorbing element.

3. The line connection device according to claim 1, wherein said surge absorbing element is connected between communication lines, or between the ground and the line, and the low melting point metal wire is mounted on one terminal of the lines to connect the connection terminal, the structure of which is contained in the connection device .

4. The line connection device according to claim 1, wherein said device has at an outer side of the device an outer terminal of the configuration such that the terminals to connect the ground, and the connection terminal can he assembled into one body.

FIG. 1

(1)

(2)

B line

A equipment

FIG. 2

(1)

GND

(2)

FIG. 3

(1)

B

A

1

(2)

7

3

5

2

8

6

(3)

6

20 ground

21

6

ground terminal plate

# INTERNATIONAL SEARCH REPORT

**I. CLASSIFIC/** **OF SUBJECT MATTER** (if several classification symbols apply, indicate all) [6]

According to Int    ial Patent Classification (IPC) or to both National Classification and IPC

Int. Cl [5]    H02H9/06

**II. FIELDS SEARCHED**

Minimum Documentation Searched [7]

| Classification System | Classification Symbols |
|---|---|
| IPC | H02H9/06, H04Q1/14, H02H3/20, H02H3/08, H02H3/22, H02H3/16 |

Documentation Searched other than Minimum Documentation
to the Extent that such Documents are Included in the Fields Searched [8]

| | |
|---|---|
| Jitsuyo Shinan Koho | 1926 - 1990 |
| Kokai Jitsuyo Shinan Koho | 1971 - 1990 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| X | JP, A, 63-18924 (Mitsubishi Mining & Cement Co., Ltd.), 26 January 1988 (26. 01. 88), Line 18, upper right column to line 6, lower left column, page 2, Figs. 1A to 2B (Family: none) | 1, 2 |
| Y | JP, A, 63-18924 (Mitsubishi Mining & Cement Co., Ltd.), 26 January 1988 (26. 01. 88), Line 18, upper right column to line 6, lower left column, page 2, Figs. 1A to 2B | 3, 4 |
| Y | JP, A, 60-141127 (Shoden K.K.), 26 July 1985 (26. 07. 85), Line 2, lower right column, page 2 to line 11, upper left column, page 3, Figs. 3 to 4 (Family: none) | 3 |
| Y | JP, U, 59-34444 (Fujitsu Ltd.), 3 March 1984 (03. 03. 84), (Family: none) | 3 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the ...blication date of another citation or other : ...ial reason (as specified)

"O" document referri ... an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| October 15, 1990 (15. 10. 90) | October 29, 1990 (29. 10. 90) |

| International Searching Authority | Signature of Authorized Officer |
|---|---|
| Japanese    ent Office | |

Form PCT ISA 210 (second sheet) (January 1985)

International Application No. PCT/JP90/01034

| FURTHER INFORMATION CONTINUED FROM THE SECOND SHEET | |
| --- | --- |
| A    JP, U, 58-73685 (Kawaguchi Denki Seisakusho K.K., Hitachi, Ltd.), 18 May 1983 (18. 05. 83), (Family: none) | 4 |

## V. ☐ OBSERVATIONS WHERE CERTAIN CLAIMS WERE FOUND UNSEARCHABLE [1]

This international search report has not been established in respect of certain claims under Article 17(2) (a) for the following reasons:

1. ☐ Claim numbers    , because they relate to subject matter not required to be searched by this Authority, namely:

2. ☐ Claim numbers    , because they relate to parts of the international application that do not comply with the prescribed requirements to such an extent that no meaningful international search can be carried out, specifically:

3. ☐ Claim numbers    , because they are dependent claims and are not drafted in accordance with the second and third sentences of PCT Rule 6.4(a).

## VI. ☐ OBSERVATIONS WHERE UNITY OF INVENTION IS LACKING [2]

This International Searching Authority found multiple inventions in this international application as follows:

1. ☐ As all required additional search fees were timely paid by the applicant, this international search report covers all searchable claims of the international application.

2. ☐ As only some of the required additional search fees were timely paid by the applicant, this international search report covers only those claims of the international application for which fees were paid, specifically claims:

3. ☐ No required additional search fees were timely paid by the applicant. Consequently, this international search report is restricted to the invention first mentioned in the claims; it is covered by claim numbers:

4. ☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)